# EUROPÄISCHE PATENTSCHRIFT

(11) **EP 1 333 306 B1**
(45) Veröffentlichungstag und Bekanntmachung des Hinweises auf die Patenterteilung: **23.07.2008**
(21) Anmeldenummer: 03002319.6
(22) Anmeldetag: 03.02.2003
(51) Int. Cl.: G02B 21/22, G02B 21/00, A61B 19/00

(54) **Stereo-Mikroskopieverfahren und Stereo-Mikroskopiesystem**
Method and system for stereoscopic microscopy
Procédé et dispositif de microscopie stéréoscopique

(30) Priorität: 04.02.2002 DE 10204430
(43) Veröffentlichungstag der Anmeldung: 06.08.2003
(73) Patentinhaber: Carl Zeiss Surgical GmbH, 73447 Oberkochen (DE)
(72) Erfinder: Haisch, Michael, Dr., 73430 Aalen (DE); Monz, Ludwin, Dr., 55122 Mainz (DE)
(74) Vertreter: Schorr, Frank Jürgen

(56) Entgegenhaltungen:
- WO-A-99/38449
- DE-A- 10 008 806
- JP-A- 2001 117 049
- US-A- 5 694 142
- US-A- 5 823 958
- US-A- 5 961 456
- US-A- 6 084 979
- WINDECKER R ET AL: "THREE-DIMENSIONAL TOPOMETRY WITH STEREO MICROSCOPES" OPTICAL ENGINEERING, SOC. OF PHOTO-OPTICAL INSTRUMENTATION ENGINEERS. BELLINGHAM, US, Bd. 36, Nr. 12, 1. Dezember 1997 (1997-12-01), Seiten 3372-3377, XP000731396 ISSN: 0091-3286

## Beschreibung

Die Erfindung betrifft ein Stereo-Mikroskopieverfahren und ein Stereo-Mikroskopiesystem zur Erzeugung wenigstens eines Paars von Darstellungen eines Objekts zur Betrachtung durch wenigstens einen Benutzer.

Das erfindungsgemäße Stereo-Mikroskopieverfahren und das erfindungsgemäße Stereo-Mikroskopiesystem dienen dazu, stereoskopische Darstellungen eines Objekts derart zu erzeugen, daß beim Betrachten der Darstellungen durch den Benutzer ein räumlicher Eindruck von dem Objekt entsteht. Hierzu ist es notwendig, daß das linke Auge und das rechte Auge des Benutzers verschiedene Darstellungen des Objekts aus unterschiedlichen Blickrichtungen auf das Objekt wahrnehmen.

In der US-Patentschrift 6,084,979 wird ein Verfahren und ein System beschrieben, das für einen Benutzer eine in Abhängigkeit von seiner Position berechnete dreidimensionale Darstellung einer Szenerie bereitstellt. Dazu werden die Signale mehrerer Kameras durch Pixel-Vergleich so aufeinander bezogen, dass daraus Blickrichtungen und Abstandinformationen gewonnen werden.

In der US-Patentschrift 6,525,878 1 wird ein Verfahren und ein System beschrieben, das für jeden Benutzer eine in Abhängigkeit von dessen Position schwenkbare Kamera aufweist, mittels derer Stereobilder eines Objekts aufgenommen und an ein diesem Benutzer zugeordnetes Display übermittelt werden. Ein stereoskopischer Bildeindruck entsteht, indem die Kamera abwechselnd Bilder aus zwei nebeneinander angeordneten Strahlengängen aufnimmt, zwischen denen mittels einer polarisierenden Strahlenteileroptik umgeschaltet wird.

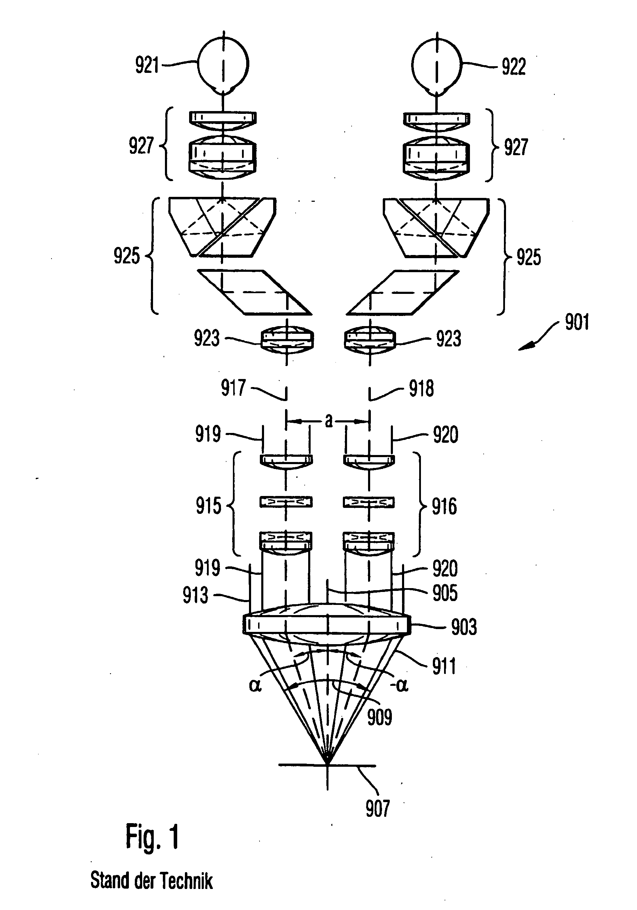

Ein Strahlengang eines anderen herkömmlichen Stereo-Mikroskops ist in Figur 1 schematisch dargestellt. Das dort gezeigte Stereo-Mikroskop 901 umfaßt ein Objektiv 903 mit einer optischen Achse 905 und einer Objektebene 907, in welcher ein zu beobachtendes Objekt zur Anordnung kommt. Ein von dem Objekt bzw. der Objektebene 907 in einen Raumwinkelbereich 909 um die optische Achse 905 emittiertes Strahlenbündel 911 bildet das Objektiv 903 nach Unendlich ab und wandelt es damit in ein paralleles Strahlenbündel 913 um. In dem parallelen Strahlenbündel 913 sind zwei Zoomsysteme 915, 916 mit jeweils einer eigenen optischen Achse 917 bzw. 918 derart nebeneinander angeordnet, daß deren optische Achsen 917 bzw. 918 parallel versetzt zu der optischen Achse 905 des Objektivs 903 und mit einem Abstand a voneinander angeordnet sind. Die beiden Zoomsysteme 915, 116 greifen aus dem parallelen Strahlenbündel 913 jeweils ein Teilstrahlenbündel 919 bzw. 920 heraus, wobei das eine Teilstrahlenbündel 919 einem linken Auge 921 des Benutzers und das andere Teilstrahlenbündel 920 einem rechten Auge 922 des Benutzers zugeführt werden. Hierzu sind in dem Strahlengang der Teilstrahlenbündel 919, 920 jeweils eine Feldlinse 923, ein Prismensystem 925 und ein Okular 927 angeordnet. Hierdurch erscheint dem linken Auge 921 das Objekt 907 in einer Darstellung aus einem Blickwinkel α bezüglich der optischen Achse 5 geneigt, während dem rechten Auge 922 das Objekt in einer Darstellung aus einem Blickwinkel -α zur optischen Achse 905 geneigt erscheint, wodurch bei dem Benutzer der stereoskopische räumliche Eindruck des Objekts entsteht.

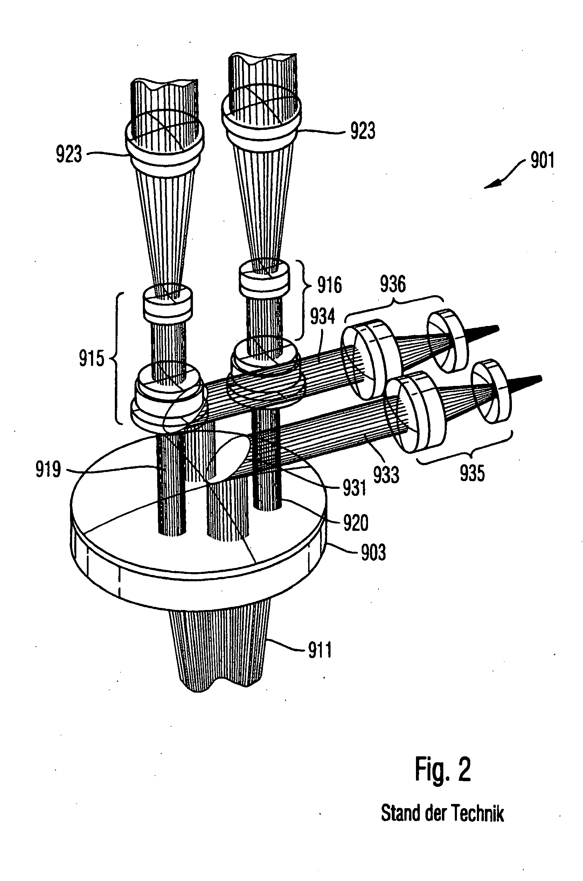

In Figur 2 ist ein Teil aus einem Strahlengang eines weiteren herkömmlichen Mikroskops 901 dargestellt, welches zwei Benutzern jeweils eine stereoskopische Darstellung eines Objekts bereitstellt. Ähnlich wie bei dem in Figur 1 gezeigten Mikroskop erzeugt ein Objektiv 903 aus einem von dem Objekt in einen Raumwinkelbereich emittierten Strahlenbündel 911 ein paralleles Strahlenbündel, aus dem zwei Zoomsysteme 915 und 916 jeweils ein Teilstrahlenbündel 919 bzw. 920 herausgreifen, die über Feldlinsen 923 und in Figur 2 nicht dargestellte Prismensysteme und Okulare den beiden Augen eines ersten Benutzers Darstellungen des Objekts zugeführt werden.

In dem parallelen Strahlengang sind ferner zwei Spiegel 931 angeordnet, die aus dem parallelen Strahlengang zwei weitere Teilstrahlenbündel 933 und 934 herausgreifen und derart reflektieren, daß sie quer zur Strahlrichtung der Teilstrahlenbündel 919, 920 verlaufen. Die beiden Teilstrahlenbündel 933 und 934 werden jeweils durch ein Zoomsystem 935 bzw. 936 und in Figur 2 ebenfalls nicht dargestellte Prismensysteme und Okulare den beiden Augen eines zweiten Benutzers zugeführt.

Die Verwendung dieses Mikroskops durch zwei Benutzer setzt voraus, daß sich die beiden Benutzer während der Betrachtung des Objekts ständig in einer festen räumlichen Position relativ zu dem Objekt bzw. Mikroskop und auch relativ zueinander befinden. Insbesondere wenn das Mikroskop als Operationsmikroskop während eines chirurgischen Eingriffes eingesetzt wird, behindert diese feste räumliche Zuordnung die beiden Benutzer, welche als Operateure in dem Operationsfeld arbeiten müssen.

Es ist demgemäß eine Aufgabe der vorliegenden Erfindung, ein Stereo-Mikroskopieverfahren und ein Stereo-Mikroskopiesystem bereitzustellen, welches wenigstens einem Benutzer Freiheitsgrade hinsichtlich seiner Anordnung relativ zu dem beobachteten Objekt bieten.

Hierzu geht die Erfindung aus von der Erkenntnis, daß bei den in den Figuren 1 und 2 gezeigten herkömmlichen Mikroskopen die von dem Objekt ausgesandte und von dem Objektiv verarbeitete Strahlung, das heißt die von dem Objekt in den Raumwinkelbereich zum Objektiv hin ausgesandte Strahlung bzw. das von dem Objektiv weitergeleitete parallele Strahlenbündel, genügend räumliche Information über das Objekt enthält, um daraus stereoskopische Darstellungen des Objekts aus einer großen Vielzahl von Blickrichtungen auf das Objekt erzeugen zu können. Es wurde weiter erkannt, daß lediglich die herkömmliche Art der Nutzung der in der von dem Objekt ausgesandten Strahlung enthaltenen Information, das heißt das Herausgreifen einzelner Teilstrahlenbündel aus dem parallelen Gesamtstrahlenbündel durch die Zoomsysteme und Spiegel der in den Figuren 1 und 2 gezeigten herkömmlichen Mikroskope, limitierend auf die Anordnung der Betrachter und deren Blickrichtungen auf das Objekt wirkt.

Die Erfindung schlägt deshalb ein Stereo-Mikroskopieverfahren bzw. ein Stereo-Mikroskopiesystem vor, bei dem eine Position des Benutzers relativ zu einem Fixpunkt in einem Benutzerkoordinatensystem erfaßt wird. In Abhängigkeit von der Position des Benutzers in seinem Benutzerkoordinatensystem werden dann zwei Orte relativ zu einem zu betrachtenden Bereich des Objekts in einem Objektkoordinatensystem festgelegt. Ein erster der beiden Orte ist dem linken Auge des Benutzers zugeordnet, während ein zweiter der beiden Orte dem rechten Auge des Benutzers zugeordnet ist. Verbindungslinien zwischen den festgelegten Orten und dem beobachteten Bereich des Objekts definieren Blickrichtungen auf das Objekt, unter denen durch das Verfahren bzw. das System Darstellungen erzeugt werden, die dem linken bzw. dem rechten Auge des Benutzers zugeführt werden. Diese Darstellungen werden von einer stereoskopischen Anzeige erzeugt, der entsprechende Bilddaten zugeführt werden. Die der Anzeige zugeführten Bilddaten werden wiederum aus Strahlungsdaten erzeugt, die ein Detektor generiert, der optische Strahlung registriert, die von dem beobachteten Oberflächen-Bereich des Objekts ausgesandt wird.

Die Erzeugung der Bilddaten aus den Strahlungsdaten erfolgt dabei in Abhängigkeit von den beiden festgelegten Orten, das heißt einer scheinbaren Blickrichtung des Benutzers auf das Objekt.

Insgesamt erhält der Benutzer bei Betrachtung der beiden Darstellungen der Stereo-Anzeigevorrichtung einen Eindruck von dem Objekt, der vergleichbar ist mit einem Eindruck, wie er ihn erhalten würde, wenn er durch ein in der Figur 1 oder 2 dargestelltes herkömmliches Stereo-Mikroskop unmittelbar auf das Objekt blicken würde. Allerdings kann der Benutzer seine Position relativ zu dem Fixpunkt in dem Benutzerkoordinatensystem ändern, was dazu führt, daß ihm seiner neuen Position entsprechend geänderte Darstellungen des Objekts zugeführt werden. Bei der Auswahl seiner scheinbaren Blickrichtung auf das Objekt ist der Benutzer damit nicht durch die starre Optik des herkömmlichen Stereo-Mikroskops limitiert.

Erfindungsgemäß umfaßt das Erzeugen der Bilddaten aus den Strahlungsdaten zunächst das Erzeugen eines das Objekt repräsentierenden Datenmodells und weiter das Erzeugen der Bilddaten für die beiden Darstellungen aus dem Datenmodell. Das Datenmodell ist hierbei wenigstens teilweise ein dreidimensionales Datenmodell, welches die räumliche Struktur bzw. Topographie einer Oberfläche des Objekts wenigstens bereichsweise wiedergibt bzw. repräsentiert.

Die Erzeugung des wenigstens teilweise dreidimensionalen Datenmodells umfaßt die Verwendung einer geeigneten Topographieerfassungsvorrichtung, welche die von dem Objekt ausgesandte Strahlung auf geeignete Weise registriert und aus den hierbei entstehenden Strahlungsdaten das Datenmodell berechnet. Hierzu kann auf herkömmliche Topographieerfassungsvorrichtungen und -verfahren zurückgegriffen werden, wie beispielsweise Streifen- und Musterprojektion, Photogrammetrie und interferometrische Verfahren.

Sofern die Topographieerfassungsvorrichtung lediglich die dreidimensionale Struktur der Oberfläche des Objekts erfaßt und Oberflächeneigenschaften des Objekts, wie etwa Farbe und Textur nicht erfaßt, ist es vorteilhaft, ferner eine Detektoreinrichtung vorzusehen, um ortsabhängig wenigstens die Farbe der Oberfläche des Objekts in dem untersuchten Bereich zu registrieren und entsprechende Farbdaten bereitzustellen. Die hierdurch gewonnene Farbinformation wird in das Datenmodell eingefügt, so daß dieses auch Farben der Oberfläche des Objekts repräsentiert.

Ein vorteilhaftes Photogrammetrieverfahren arbeitet mit zwei Kameras, welche aus unterschiedlichen Blickwinkeln Bilder des Objekts gewinnen.

Hierbei ist es wiederum vorteilhaft, wenn eine erste der beiden Kameras Bilder eines größeren Bereichs des Objekts mit einer niedrigeren Ortsauflösung gewinnt und eine zweite Kamera Bilder lediglich eines kleineren Teilbereichs des größeren Bereichs mit einer höheren Ortsauflösung gewinnt. Aus dem kleineren Teilbereich des Objekts werden hierdurch Strahlungsdaten gewonnen, die die dreidimensionale Topographie des Objekts in diesem Teilbereich repräsentieren. Entsprechend ist es möglich, ein dreidimensionales Datenmodell zu erzeugen, welches die Topographie des Teilbereichs des Objekts repräsentiert. Von dem lediglich von der ersten Kamera beobachteten Bereich des Objekts, der außerhalb des auch von der zweiten Kamera beobachteten Teilbereichs liegt, werden somit Strahlungsdaten gewonnen, die für die Erzeugung eines dreidimensionalen Datenmodells dieses Objektbereichs nicht ausreichen und lediglich die zweidimensionale Struktur des Objekts in diesem Bereich repräsentieren. Allerdings werden auch diese Strahlungsdaten in das Datenmodell eingefügt, so daß dieses auch den gesamten von der ersten Kamera beobachteten Bereich des Objekts repräsentiert, wobei dieses Datenmodell dann lediglich teilweise dreidimensional ist.

Wenn der auch von der zweiten Kamera beobachtete Teilbereich des Objekts zentral in dem von der ersten Kamera beobachteten Bereich des Objekts angeordnet ist, führt dies dazu, daß der Benutzer im Zentrum seines Bildfelds eine dreidimensionale stereoskopische Darstellung des Objekts mit erhöhter Auflösung wahrnimmt, und er am Rand seines Bildfelds eine lediglich zweidimensionale Darstellung mit verringerter Auflösung wahrnimmt. Das Fehlen der stereoskopischen Darstellung am Bildfeldrand wird vom Benutzer nicht immer als Nachteil empfunden, während die erhöhte Auflösung im Bildfeldzentrum als Vorteil empfunden wird.

Der Fixpunkt des Benutzerkoordinatensystems kann innerhalb des beobachteten Bereichs des Objekts liegen. Bei entsprechender Ausrichtung des Objektkoordinatensystems und des Benutzerkoordinatensystems relativ zueinander erhält der Benutzer bei Betrachtung der stereoskopischen Anzeige dann eine Darstellung des Objekts mit derselben Perspektive bzw. Blickrichtung wie beim direkten Blick auf das Objekt.

Alternativ ist es jedoch auch möglich, daß der Fixpunkt des Benutzerkoordinatensystems entfernt von dem Objekt angeordnet ist, so daß der Benutzer und das von ihm beobachtete Objekt räumlich voneinander getrennt sein können.

Ausführungsformen der Erfindung werden nachfolgend anhand von Zeichnungen näher erläutert. Hierbei zeigt
- Figur 1: einen Strahlengang eines herkömmlichen Stereo-Mikroskops in schematischer Darstellung,
- Figur 2: einen Teil eines Strahlgangs eines herkömmlichen Stereo-Mikroskops in schematischer Darstellung,
- Figur 3: eine Ausführungsform eines erfindungsgemäßen Stereo-Mikroskopiesystems in schematischer Darstellung,
- Figur 4: eine Topographieerfassungsvorrichtung zum Einsatz in dem in Figur 3 gezeigten System,
- Figur 5: eine Veranschaulichung eines Datenmodells für das in Figur 3 gezeigte Stereo-Mikroskopiesystem,
- Figur 6: ein Flußdiagramm des im Zusammenhang mit dem Stereo-Mikroskopiesystem in Figur 3 erläuterten Stereo-Mikroskopieverfahrens
- Figur 7: eine Variante der in Figur 4 gezeigten Topographieerfassungsvorrichtung,
- Figur 8: eine weitere Variante der in Figur 4 gezeigten Topographieerfassungsvorrichtung,
- Figur 9: noch eine weitere Variante der in Figur 4 gezeigten Topographieerfassungsvorrichtung,
- Figur 10: noch eine weitere Variante der in Figur 4 gezeigten Topographieerfassungsvorrichtung, und
- Figur 11: eine Variante der in Figur 3 gezeigten Positionserfassungseinrichtung.

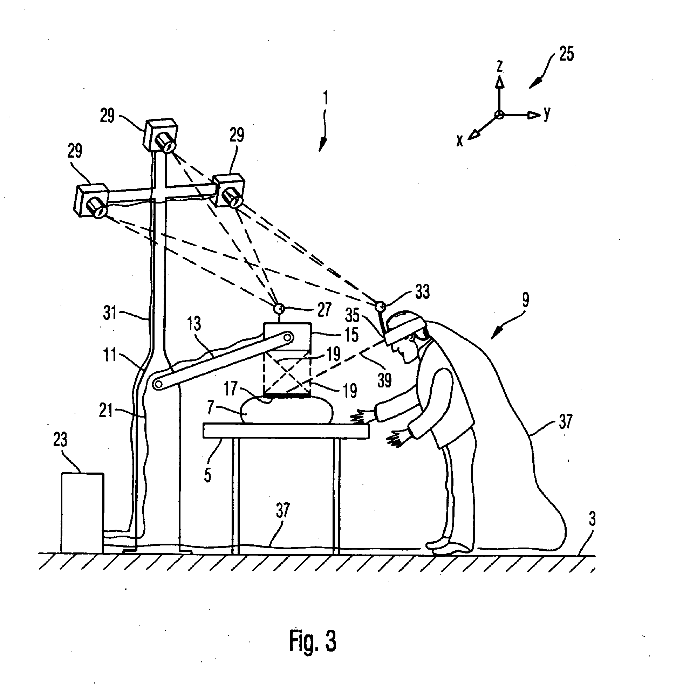

Figur 3 zeigt einen Operationssaal, in dem ein erfindungsgemäßes Stereo-Mikroskopiesystem 1 installiert ist. Auf einem Boden 3 des Operationssaals ist ein Operationstisch 5 fest angeordnet, auf dem ein Patient 7 liegt, an dem ein Operateur 9 einen mikrochirurgischen Eingriff vornimmt. Auf dem Boden 3 des Operationssaals ist ein Stativ 11 fest angebracht, welches an einem schwenkbaren Arm 13 eine Topographieaufnahmevorrichtung 15 schwenkbar haltert und welche derart über dem Patienten 7 angeordnet ist, daß die Topographieaufnahmevorrichtung 15 eine Oberflächengeometrie bzw. Topographie eines Bereichs 17 des Patientens 7 aufnehmen kann. Die Topographieaufnahmevorrichtung 15 arbeitet optisch, und in Figur 3 sind optische Strahlen, welche von dem Bereich 17 des Patienten 7 ausgehen und von der Topographieaufnahmevorrichtung 15 aufgenommen werden, symbolisch als gestrichelte Linien 19 dargestellt.

Die Topographieaufnahmevorrichtung 15 gewinnt aus dieser Strahlung 19 Strahlungsdaten, welche über eine Datenleitung 21 an einen Rechner 23 übertragen werden. Der Rechner 23 rekonstruiert aus den erhaltenen Strahlungsdaten eine dreidimensionale Struktur bzw. Topographie des Bereichs 17 des Patienten 7 als dreidimensionales Datenmodell. Dies bedeutet, daß in einem Speicherbereich des Rechners eine digitale Darstellung vorliegt, welche die Geometrie bzw. die Topographie des Bereichs 17 des Patienten 7 repräsentiert. Dieses Datenmodell wird in Bezug auf ein Koordinatensystem x, y, z berechnet, welches in Figur 3 symbolisch unter dem Bezugszeichen 25 dargestellt ist.

Zur korrekten Transformation des dreidimensionalen Datenmodells in das Koordinatensystem 25 des Operationssaals trägt die Topographieaufnahmevorrichtung 15 eine Leuchtdiode 27, deren Strahlung von drei Kameras 29 aufgenommen wird, welche an dem Stativ 11 jeweils mit Abstand voneinander festgemacht sind und deren Position in dem Koordinatensystem 25 des Operationssaals bekannt ist. Die Bilder der Kameras 29 werden über eine Datenleitung 31 an den Rechner 23 übergeben, welcher aus den erhaltenen Bildern eine Position der Topographieaufnahmevorrichtung 15 in dem Koordinatensystem 25 des Operationssaals berechnet.

Damit sind die von der Topographieaufnahmevorrichtung 15 gewonnenen Strahlungsdaten korrekt in das Koordinatensystem 25 des Operationssaals einordenbar.

Es ist auch möglich, drei voneinander beabstandete Leuchtdioden 27 vorzusehen, so daß neben der Position auch eine Orientierung der Topographieaufnahmevorrichtung 15 berechnet werden kann. Hierbei können die Leuchtdioden 27 durch verschiedene Lichtfarben und/oder Blinkfrequenzen voneinander unterscheidbar ausgebildet sein.

Der Operateur 9 trägt an seinem Kopf eine Leuchtdiode 33, deren Position im Koordinatensystem 25 des Operationssaals ebenfalls von den Kameras 29 erfaßt und von dem Rechner 23 ausgewertet wird. Damit erfaßt der Rechner 23 auch die genaue Position des Operateurs 9 in dem Koordinatensystem 25. Der Operateur 9 trägt an seinem Kopf ferner eine kopfgetragene Anzeige ("head mounted display") 35, welche einem jeden Auge des Operateurs 9 eine separate Darstellung des Bereichs 17 des Patienten 7 liefert. Die für diese Darstellung für die beiden Augen des Operateurs 9 notwendigen Bilddaten generiert der Rechner 23 aus dem dreidimensionalen Datenmodell des Bereichs 17 des Patienten 7 und führt diese Bilddaten über eine Datenleitung 37 der Anzeige 35 zu.

Dabei generiert der Rechner 23 die Bilddaten derart, daß der Operateur 9 bei der Betrachtung der ihm dargebotenen stereoskopischen Darstellung einen Eindruck von dem Bereich 17 des Patienten 7 erhält, wie wenn er unmittelbar auf den Bereich 17 blicken würde, wie dies in Figur 3 symbolisch durch eine gestrichelte Blicklinie 39 dargestellt ist.

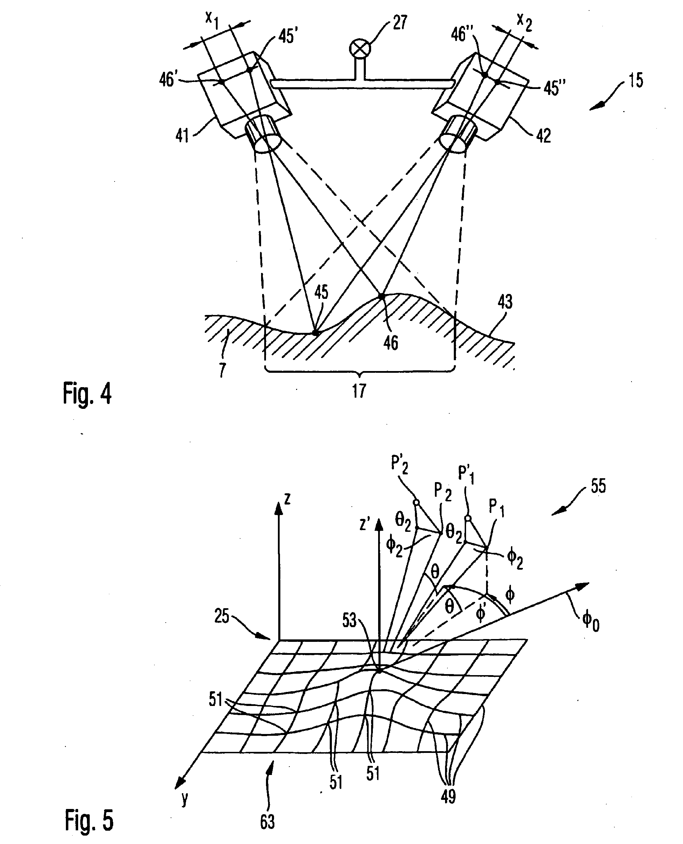

Figur 4 zeigt einen Teil der Topographieaufnahmevorrichtung 15 im Detail. Die Topographieaufnamevorrichtung 15 arbeitet nach einem Photogrammetrieverfahren, wozu sie zwei Kameras 41 und 42 umfaßt, welche mit Abstand voneinander derart angeordnet sind, daß eine jede der Kameras 41, 42 ein Bild von einem Bereich 17 einer Oberfläche 43 des Patienten 7 aufnehmen kann. Aufgrund des Abstands der beiden Kameras 41, 42 voneinander gewinnen diese Aufnahmen des Bereichs 17 aus verschiedenen Blickwinkeln. Dadurch unterscheiden sich die von den Kameras 41, 42 gewonnenen Aufnahmen voneinander, wie dies anhand der in Figur 4 eingetragenen exemplarischen Punkte 45, 46 nachvollziehbar ist. Die beiden Punkte 45, 46 werden in einer Bildebene der Kamera 41 in Bilder 45' bzw. 46' abgebildet, welche einen Abstand x₁ voneinander aufweisen, welcher größer ist als ein Abstand x₂, den Bildpunkte 45" und 46" in einer Bildebene der Kamera 42 voneinander aufweisen.

Durch geeignete Auswertung der von den Kameras 41 und 42 gelieferten Bilder bzw. Strahlungsdaten kann der Rechner 23 dann ein Datenmodell des Bereichs 17 der Oberfläche 43 des Patienten 7 gewinnen.

Weitergehende Beispiele für Photogrammetrieverfahren und Vorrichtungen hierzu sind beispielsweise in US 6,165,181 angegeben. Die in dieser Schrift zitierten Referenzen geben weitere Beispiele für Photogrammetrieverfahren an.

Das errechnete Datenmodell des Bereichs 17 ist in Figur 5 schematisch als ein System aus Gitternetzlinien 49 dargestellt. Einer jeden Kreuzung 51 von Gitternetzlinien 49 ist hierbei ein Datensatz von Koordinaten x, y und z der Kreuzungspunkte 51 zugeordnet. Das dreidimensionale Datenmodell ist damit durch eine Vielzahl von Zahlentripeln repräsentiert, welche die Koordinaten der Oberfläche 43 des Patienten 7 in dem Bereich 17 im Koordinatensystem 25 des Operationssaals repräsentieren. Einer jeden Kreuzung 51 können noch weitere Datensätze zugeordnet sein, welche beispielsweise Farbwerte oder andere Eigenschaften des beobachteten Objekts an den entsprechenden Orten repräsentieren.

Diese vorangehend geschilderte Repräsentierung des Datenmodells im Speicher des Rechners 23 ist jedoch exemplarisch, es sind eine Vielzahl anderer Speichertechniken für Datenmodelle bekannt, welche dreidimensionale Strukturen im Raum repräsentieren.

An einem in einem zentralen Bereich der Datenstruktur angeordneten Schnittpunkt der Gitternetzlinien 49 ist ein Fixpunkt 53 festgelegt, welcher einerseits als Ursprung eines Benutzerkoordinatensystems 55 dient und andererseits Mittelpunkt eines zentralen Bereichs des Objekts 7 ist, und welcher dem Operateur 9 derart dargestellt wird, daß dieser den Eindruck gewinnt, daß sein Blick 39 auf diesen Fixpunkt 53 des zentralen Bereichs gerichtet ist. Die Position des Operateurs 9 in dem Benutzerkoordinatensystem 55 wird ausgedrückt durch Azimute φ um eine parallel zur z-Achse des Objektkoordinatensystems 25 orientierte Hochachse z', und zwar ausgehend von einer horizontal in dem Objektkoordinatensystem 25 sich erstreckende willkürliche Gerade φ₀.

In dem Objektkoordinatensystem 25 werden zwei Orte P₁ und P₂, beispielsweise als Koordinaten x, y, z, festgelegt, welche in dem Benutzerkoordinatensystem 55 verschiedene Azimute φ und φ' und gleiche Elevationen θ aufweisen. Die Elevation θ kann dabei die Elevation sein, unter der die Sichtlinie 39 des Operateurs auf den Bereich 17 des Objekts 7 trifft. Ein Mittelwert zwischen den beiden Azimuten φ und φ' ist dabei in etwa gleich dem Azimut, mit dem der Operateur 9 relativ zu dem Patienten 7 orientiert ist. Die Differenz zwischen φ und φ' kann einen festgelegten Wert aufweisen, wie etwa 20°, sie kann jedoch auch abhängig von einem Abstand des Operateurs 9 von dem Fixpunkt 53 gewählt werden und dabei mit zunehmendem Abstand kleiner werden.

Der Rechner 23 generiert die Bilddaten für die Darstellung des Bereichs 17 des Patienten 7 durch die kopfgetragene Anzeige 35 derart, daß dem linken Auge des Operateurs 9 eine Darstellung zugeführt wird, wie sie bei Betrachtung des dreidimensionalen Datenmodells vom Punkt P₁ aus erscheinen würde, während die Bilddaten für die dem rechten Auge zugeführte Darstellung derart generiert werden, daß das dreidimensionale Datenmodell wie bei Betrachtung vom Ort P₂ aus erscheint.
Wenn sich die Position des Operateurs 9 in dem Benutzerkoordinatensystem 55 azimutal um einen Winkel φ₂ und elevational um einen Winkel θ₂ ändert, so werden entsprechend die Punkte P₁ und P₂ in dem Objektkoordinatensystem 24 in Punkte P₁' und P₂' derart verlagert, daß deren neue Positionen gegenüber den vorangehenden Positionen in Bezug auf den Fixpunkt 53 azimutal um den Winkel φ₂ und elevational ebenfalls um den Winkel θ₂ geändert sind.

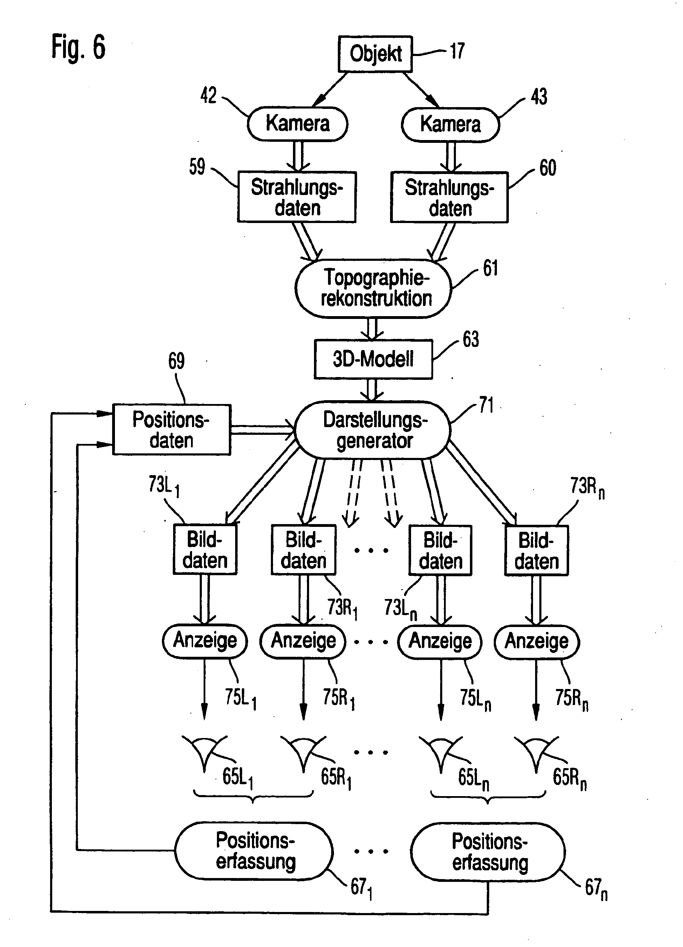

Das Stereo-Mikroskopieverfahren wird nachfolgend nochmals anhand des Flußdiagramms der Figur 6 erläutert:

Das Objekt 17 wird durch die beiden Kameras 42 und 43 aus unterschiedlichen Perspektiven aufgenommen. Die Kameras 42, 43 liefern ihren Aufnahmen entsprechende Strahlungsdaten 59, 60 an den Rechner 23, welcher mit einem Topographierekonstruktionssoftwaremodul 61 aus den Strahlungsdaten 59 und 60 ein dreidimensionales Datenmodell 63 des beobachteten Objekts 17 generiert.

Das Stereo-Mikroskopiesystem kann linken Augen 65L und rechten Augen 65R mehrerer Benutzer Darstellungen des beobachteten Objekts zuführen. Hierzu ist einem jeden Benutzer eine Positionserfassungseinrichtung 67 zugeordnet, welche die Position beispielsweise eines zwischen den beiden Augen 65L, 65R am Kopf des Benutzers angeordneten Punktes in dem Benutzerkoordinatensystem 59 erfassen und entsprechende Positionsdaten 69 erzeugen. Diese Positionsdaten werden einem Darstellungsgenerator ("rendering engine") 71 zugeführt, welcher aus dem 3D-Modell 63 Bilddaten erzeugt, die Anzeigen 75 zugeführt werden, welche von den Augen 65 der Benutzer betrachtet werden.

Hierbei erzeugt der Darstellungsgenerator 71 für einen jeden der Benutzer Bilddaten 73L und 73R, welche an Anzeigen 75L bzw. 75R Darstellungen für jeweils das linke Auge 65L bzw. das rechte Auge 65R dieses Benutzers erzeugen. Ein jeder der Benutzer erhält damit über die Anzeigen 75L und 75R Darstellungen des Objekts 7 zugeführt, welche bei ihm den Eindruck hervorrufen, er würde das Objekt 17 aus einer Perspektive betrachten, welche der Perspektive entspricht, wenn der Benutzer das Objekt 17 unmittelbar von seinem Standpunkt aus betrachten würde.

Bei der vorangehend erläuterten Ausführungsform ist der Fixpunkt 53 des Benutzerkoordinatensystems, in welchem die Position des Benutzers erfaßt wird, zentral in dem beobachteten Bereich 17 des Objekts 7 angeordnet. Dies ist dann sinnvoll, wenn der Benutzer unmittelbar Manipulationen an dem beobachteten Objekt 7 vornehmen soll, wie dies in dem in Figur 3 gezeigten Fall des Chirurgen im Operationssaal zutrifft.

Andererseits ist es auch möglich, daß der Benutzer entfernt von dem beobachteten Objekt angeordnet ist und somit der Fixpunkt des Benutzerkoordinatensystems nicht mit dem beobachteten Bereich des Objekts zusammenfällt. Eine Anwendung hierfür wäre beispielsweise bei einem Telechirurgieverfahren gegeben, wo der Operateur entfernt von dem Patienten angeordnet ist und über einen ferngesteuerten Roboter den Eingriff an dem Patienten vornimmt. Der Fixpunkt für die Bestimmung der Positionsdaten 69 ist dann im Gesichtsfeld des Operateurs bzw. Benutzers angeordnet, und es ist eine Abbildung zwischen dem Benutzerkoordinatensystem und dem Koordinatensystem des Operationssaals definiert, durch welche der Fixpunkt vor dem Operateur beispielsweise in den beobachteten Bereich des Patienten transformierbar ist. Durch Bewegung seines Kopfes kann somit auch der entfernt von dem Patienten angeordnete Operateur aus unterschiedlichen Perspektiven Eindrücke von dem behandelten Patienten gewinnen.

Eine weitere Möglichkeit für die entfernte Anordnung des Beobachters von dem beobachteten Objekt ist beispielsweise dann gegeben, wenn an dem Operationstisch nur für wenige Personen Platz ist und weitere Personen, beispielsweise Studenten, diese Operation "hautnah" verfolgen möchten. Es können diese Personen sich dann außerhalb des Operationssaals befinden, für eine jede dieser Personen kann ein Fixpunkt und eine Orientierung ihres Benutzerkoordinatensystems im Raum festgelegt werden, so daß sie dann bei Betrachtung ihrer kopfgetragenen Anzeige einen Eindruck erhalten, wie wenn der beobachtete Bereich des Patienten um diesen ihren Fixpunkt herum angeordnet wäre.

Nachfolgend werden Varianten der in den Figuren 1 bis 6 erläuterten Ausführungsform der Erfindung dargestellt. Hinsichtlich ihres Aufbaus und ihrer Funktion einander entsprechende Komponenten sind mit den Bezugszahlen der Figuren 1 bis 6 bezeichnet, zu ihrer Unterscheidung jedoch mit einem zusätzlichen Buchstaben versehen. Zur Erläuterung wird auf die gesamte vorangehende Beschreibung Bezug genommen.

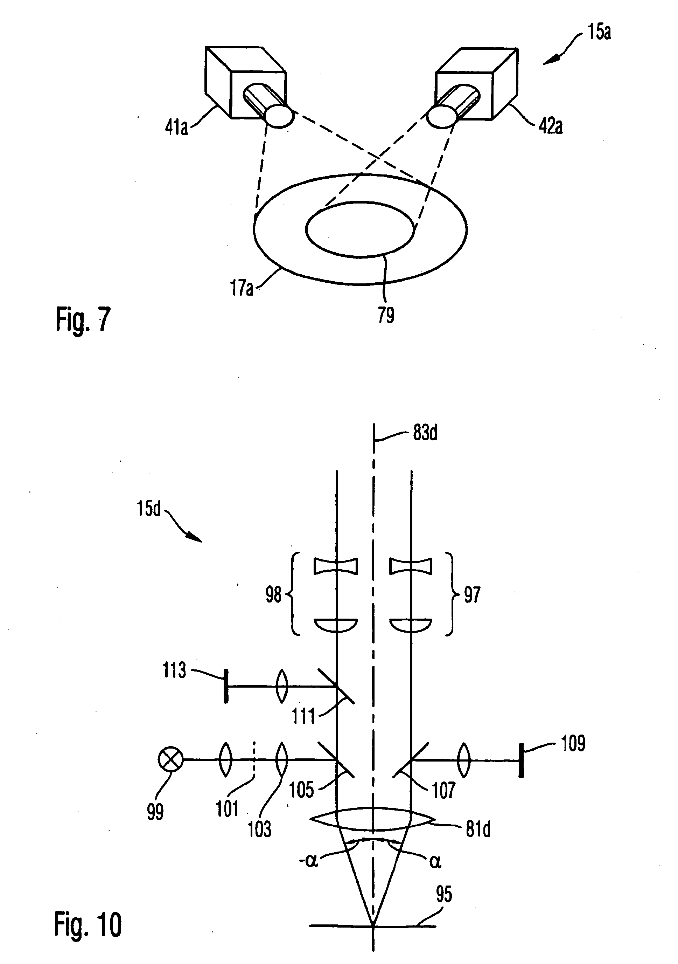

In Figur 7 ist eine Topographieaufnahmeeinrichtung 15a schematisch dargestellt, welche der in Figur 4 gezeigten Topographieaufnahmevorrichtung ähnlich ist, indem sie ebenfalls nach dem Prinzip der Photogrammetrie arbeitet. Eine Kamera 41a nimmt ein Bild eines größeren Bereichs 17a des beobachteten Objekts auf. Eine weitere Kamera 42a nimmt ein Bild eines zentral in dem von der Kamera 41a aufgenommenen Bereich 17a angeordneten kleineren Teilbereichs 79 auf. Beide Kameras 41a und 42a weisen gleiches Auflösungsvermögen auf, das heißt die Zahlen ihrer lichtempfindlichen Pixel sind gleich. Damit erzielt die Kamera 41a mit den von ihr aufgenommenen Bildern bzw. erzeugten Bilddaten eine geringere Ortsauflösung an dem beobachteten Objekt als die Kamera 42a. In dem Teilbereich 79 wird das Objekt aus zwei unterschiedlichen Perspektiven durch die Kameras 41a und 42a aufgenommen, so daß in diesem Teilbereich 79 ein dreidimensionales Datenmodell rekonstruiert werden kann, welches die räumliche Struktur des Objekts in dem Teilbereich 79 repräsentiert. Für den außerhalb des Teilbereichs 79 liegenden Teil des Bereichs 17a ist es hingegen nicht möglich, die Struktur des Objekts dreidimensional zu rekonstruieren. Allerdings werden die (zweidimensionalen) Strahlungsdaten der Kamera 41a für den außerhalb des Teilbereichs 79 liegenden Teil des Bereichs 17a für eine entsprechende zweidimensionale Repräsentierung des Objekts in diesem Bereich verwendet.

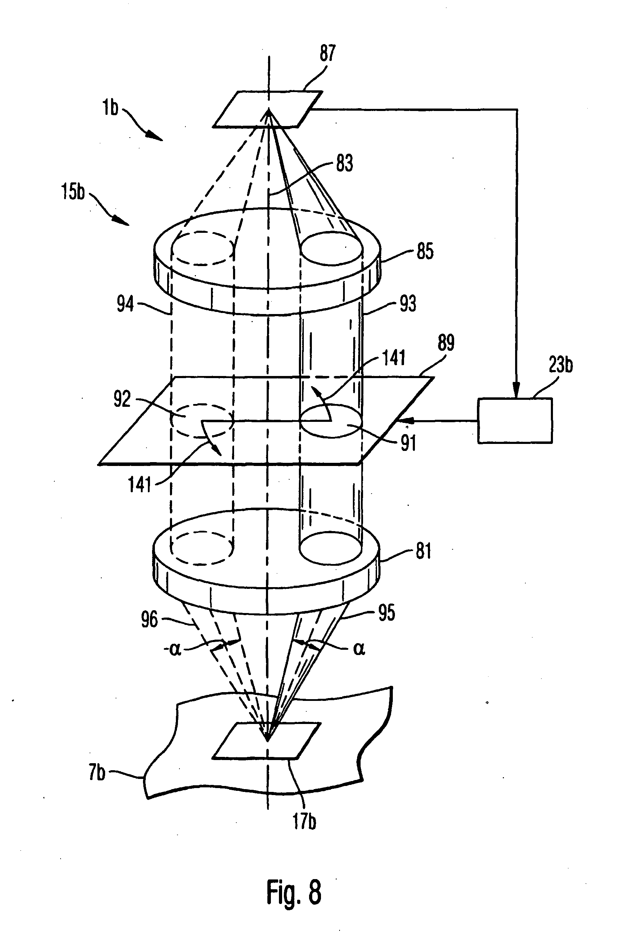

In Figur 8 ist eine Variante der in den Figuren 4 und 7 dargestellten Topographieaufnahmevorrichtungen gezeigt. Eine in Figur 8 dargestellte Topographieaufnahmevorrichtung 15b ist Teil ebenfalls eines Stereo-Mikroskopiesystems 1b und umfaßt ein Mikroskopobjektiv 81 mit einer optischen Achse 83. In einer Objektebene des Objektivs 81 ist ein Objekt 7b angeordnet. Das Objektiv 81 bildet das Objekt 7b nach unendlich ab. Ferner ist entlang der optischen Achse 83 mit Abstand von dem Objektiv 81 ein Linsensystem 85 derart angeordnet, daß auf einem in einer Bildebene des Linsensystems 85 angeordneten CCD-Chip 87 ein Bild des beobachteten Bereichs 17b des Objekts 7b entsteht.

In einem parallelen Strahlengang zwischen dem Objektiv 81 und dem Linsensystem 85 ist eine schaltbare Blende 89 angeordnet, deren Schaltzustand von einem Computer 23b angesteuert wird. Die von dem CCD-Chip 87 registrierten Strahlungsdaten werden an den Computer 23b ausgegeben.

Die schaltbare Blende 89 weist eine Vielzahl von separat ansteuerbaren Flüssigkristallelementen auf. Außerhalb von zwei mit Abstand voneinander angeordneten kreisförmigen Bereichen 91 und 92 sind die Flüssigkristallelemente ständig in einen Zustand geschaltet, in dem sie Licht nicht durchtreten lassen. Die kreisförmigen Bereiche 91 und 92 werden abwechselnd in einen im wesentlichen lichtdurchlässigen und einen Licht im wesentlichen nicht durchlassenden Zustand geschaltet.

In dem in Figur 8 gezeigten Schaltzustand ist der Bereich 91 in seinen lichtdurchlässigen Zustand geschaltet, während der Bereich 92 in seinen lichtundurchlässigen Zustand geschaltet ist. Entsprechend tritt durch die schaltbare Blende 89 ein Teilstrahlenbündel 93 des aus dem Objektiv 81 austretenden Gesamtstrahlenbündels hindurch und wird durch das Linsensystem 85 auf den CCD-Chip 87 abgebildet. Damit trifft auf den Chip 87 lediglich Licht eines unter einem Winkel α bezüglich der optischen Achse 83 aus dem beobachteten Bereich 17b austretenden konischen Strahlenbündels 95. Damit nimmt der Chip 87 von dem beobachteten Bereich 17b eine Aufnahme auf, wie sie bei Beobachtung unter einem Winkel α zur optischen Achse 83 erscheint. Strahlungsdaten, welche diese Aufnahme verkörpern, werden an den Rechner 23b übermittelt.

Nachfolgend steuert der Rechner 23b die Blende 89 derart an, daß die Flüssigkristallelemente in dem Bereich 91 in ihren lichtundurchlässigen Zustand geschaltet werden, während die Flüssigkristallelemente in dem Bereich 92 in ihren lichtdurchlässigen Zustand geschaltet werden. Entsprechend tritt dann durch die Blende 89 ein Teilstrahlenbündel 94, welches einem von dem Objekt 7b unter einem Winkel -α zur optischen Achse 83 austretenden konischen Strahlenbündel 96 entspricht und welches durch das Linsensystem 85 wieder auf den Detektor 87 abgebildet wird. Entsprechend nimmt der Detektor 87 in diesem Schaltzustand der Blende 89 eine Aufnahme des Objekts 7b unter einem Blickwinkel -α zur optischen Achse auf. Auch diese Aufnahme wird als Strahlungsdaten an den Rechner 23b übermittelt.

Der Rechner 23b erhält somit zeitlich nacheinander Strahlungsdaten von dem Objekt unter jeweils unterschiedlichen Blickrichtungen auf das Objekt. Aus diesen Strahlungsdaten kann der Rechner 23b wieder ein dreidimensionales Datenmodell des Objekts 7b erzeugen, wie dies vorangehend bereits erläutert wurde.

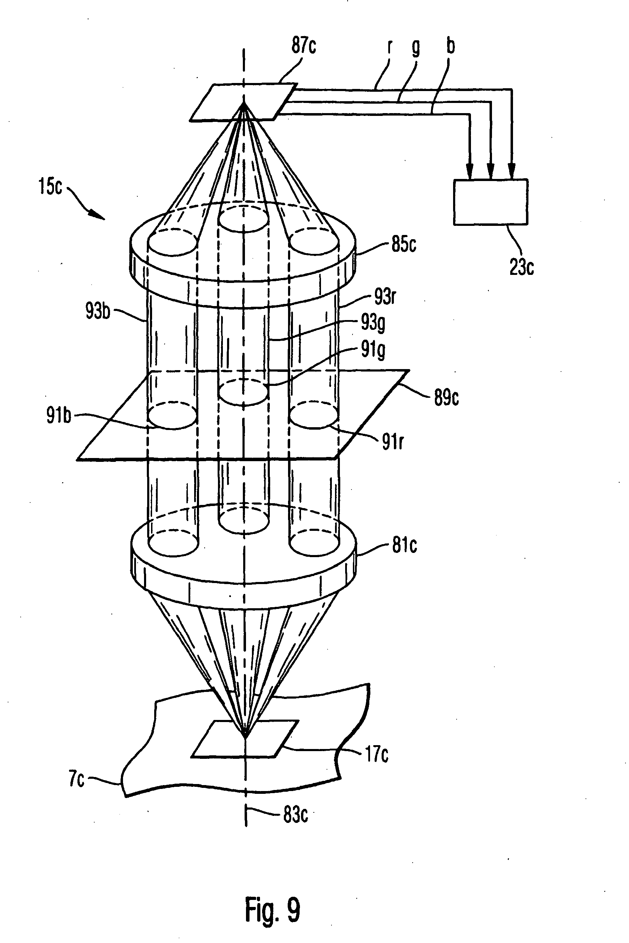

In Figur 9 ist eine weitere Variante der in Figur 8 gezeigten Topographieaufnahmevorrichtung dargestellt. Im Unterschied zu der in Figur 8 gezeigten Topographieaufnahmevorrichtung nimmt die in Figur 9 gezeigte Vorrichtung 15c Bilder unter unterschiedlichen Perspektiven eines Objekts 7c nicht zeitlich nacheinander, sondern gleichzeitig auf. Hierzu ist ein Farb-CCD-Chip 87c auf einer optischen Achse 83c angeordnet, entlang der ein Linsensystem 85c und ein Objektiv 81c und ein zu beobachtender Bereich 17c des beobachteten Objekts 7c derart angeordnet sind, daß der beobachtete Bereich 17c auf den Farb-CCD-Chip 87c abgebildet wird und zwischen dem Linsensystem 85c und dem Objektiv 81c ein paralleler Strahlengang entsteht. Zwischen dem Objektiv 81c und dem Linsensystem 85c ist eine Blende 89c angeordnet, welche mit Ausnahme von kreisrunden Bereichen 91r, 91g, 91b lichtundurchlässig ist. Die lichtdurchlässigen Bereiche 91r, 91g, 91b sind mit Abstand voneinander und mit Abstand von der optischen Achse 83c und in Umfangrichtung um diese verteilt angeordnet. Der kreisförmige Bereich 91r läßt lediglich rotes Licht durchtreten, der Bereich 91g läßt lediglich grünes Licht durchtreten und der Bereich 91b läßt lediglich blaues Licht durchtreten. Der Farb-CCD-Chip 87c liefert Strahlungsdaten für eine jede Farbe rot, grün und blau an den Rechner 23c. Die mit den verschiedenen Spektralfarben aufgenommenen Bilder des Objekts 17c sind damit aus jeweils unterschiedlichen Perspektiven bzw. Winkeln zur optischen Achse 83c aufgenommen. Durch eine geeignete Auswertung dieser Strahlungsdaten kann der Rechner 23c wiederum ein dreidimensionales Datenmodell es Objekt 7c erzeugen.

In Figur 10 ist eine weitere Variante einer Topographieaufnahmevorrichtung 15d schematisch dargestellt, die nach einem Musterprojektionsverfahren arbeitet. Die Topographieaufnahmevorrichtung weist einen Aufbau auf, welcher dem in Figur 1 dargestellten herkömmlichen Mikroskop ähnlich ist und ein Objektiv 81d aufweist, welches entlang einer optischen Achse 83d angeordnet ist und in dessen Objektebene 95 ein zu beobachtendes Objekt anordenbar ist. Es sind zwei mit Abstand von der optischen Achse 83d angeordnete Zoomsysteme 97 und 98 vorgesehen, welche einem linken bzw. rechten Auge eines Benutzers zugeordnet sind, so daß der Benutzer das Objekt auch unmittelbar durch das Mikroskop auf die herkömmliche Weise beobachten kann. In Ergänzung zu der herkömmlichen Beobachtung des Objekts ist eine Infrarotlichtquelle 99 vorgesehen, welche eine Blende 101 beleuchtet, welche auf die Objektebene 95 abgebildet wird, wozu ein Kondensor 103 vorgesehen ist sowie ein dichroidischer Spiegel 105, um das Bild der Blende 101 in den Strahlengang des Mikroskops derart einzukoppeln, daß das die Blende 101 durchsetzende Licht der Infrarotlichtquelle 99 auch das Objektiv 81d des Mikroskops durchsetzt. Die Blende 101 besitzt eine Gitterstruktur, welche durch das Infrarotlicht auf die Objektebene 95 abgebildet wird. Somit entsteht in der Objektebene 95 ein mit Infrarotlicht projiziertes Muster, wobei von den mit Infrarotlicht beleuchteten Bereichen der Objektoberfläche Infrarotlicht zurückgeworfen wird. Hierbei erfolgt die Projektion des Musters auf das Objekt unter einem Winkel -α zu der optischen Achse 83d. Das von dem Objekt zurückgeworfene Infrarotlicht, welches unter einem Winkel α zur optischen Achse 83d zum Objektiv 81d zurückläuft, wird von einem dichroidischen Spiegel 107 aus dem Strahlengang des Mikroskops ausgekoppelt und auf eine Infrarotkamera 109 abgebildet.

Durch Auswerten des von der Kamera 109 gewonnenen Bildes ist es somit möglich, die dreidimensionale Struktur des beobachteten Objekts zu rekonstruieren und als dreidimensionales Datenmodell zu speichern. Dieses dreidimensionale Datenmodell kann dann wiederum zur Generierung von Darstellungen für einen Benutzer verwendet werden, der diese Darstellungen über ein Stereo-Anzeigesystem betrachtet.

Weitere Beispiele für Musterprojektionsverfahren sind beispielsweise in US 4,498,778, in US 4,628,469 und in US 5,999,840 angegeben.

Die Rekonstruktion der Topographie des Objekts aus dem projizierten Muster erlaubt es zwar, die dreidimensionale Struktur des Objekts zu rekonstruieren, allerdings ist es nicht möglich, alleine durch Musterprojektion auch Information über die Oberflächenfarbe zu bekommen. Deshalb ist in dem Strahlengang des Mikroskops ein teildurchlässiger Spiegel 111 vorgesehen, um Licht für eine im sichtbaren Bereich empfindliche Kamera 113 auszukopppeln. Deren Strahlungsdaten werden dazu verwendet, in das auf der Grundlage der von der Kamera 109 gewonnenen Strahlungsdaten erzeugte dreidimensionale Datenmodell des Objekts Farbinformation einzuzufügen.

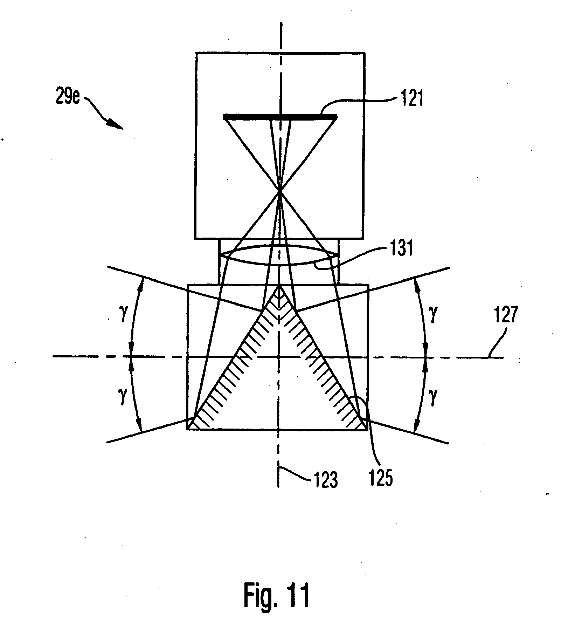

In Figur 11 ist eine Variante einer Positionserfassungsvorrichtung 29e schematisch dargestellt. Diese könnte beispielsweise unmittelbar auf oder an der in Figur 3 gezeigten Topographieaufnahmevorrichtung montiert sein, um eine Position des Benutzers in dem Operationssaal relativ zu der Topographieaufnahmevorrichtung zu erfassen.

Hierzu wäre eine optische Achse 123 der Positionserfassungseinrichtung 29e vertikal im Operationssaal auszurichten. Die Positionserfassungsvorrichtung 29e umfaßt einen konischen Spiegel 125, welcher Strahlung, die unter einem Winkel von ±γ zu einer horizontalen Ebene 127 auf den Spiegel 125 trifft, auf eine Optik 131 reflektiert, welche diese Strahlung auf einen CCD-Chip 121 abgebildet.

Ein Benutzer, der an seinem Kopf eine Lichtquelle trägt, ist mit diesem System 29e in dem Operationssaal lokalisierbar, da seine azimutale Position um die Achse 123 sowie seine Elevation bezüglich der Ebene 127 in einem Bereich ±γ durch Auswertung des Bildes des CCD-Chips 121 bestimmt werden kann. Sind mehrere Benutzer in dem Operationssaal, ist es möglich, daß ein jeder Benutzer eine Lichtquelle trägt, deren Leuchtintensität sich zeitabhängig ändert, wobei für jeden Benutzer ein anderes charakteristisches Zeitmuster für die Leuchtintensität vorgesehen ist. Durch Auswertung des Bildes der Kamera 121 und Berücksichtigung des registrierten Zeitmusters ist es somit möglich, auf die Position eines jeden der Benutzer zu schließen.

Die in Figur 8 dargestellte Topographieaufnahmevorrichtung eröffnet eine Möglichkeit, einem Benutzer ortsabhängig ein stereoskopisches Bild des Objekts zu liefern, ohne daß ein vollkommenes dreidimensionales Datenmodell des Objekts rekonstruiert werden muß. Es werden durch die dort gezeigte Kamera 87 zeitlich nacheinander Bilder aufgenommen und entsprechende Strahlungsdaten ausgegeben, welche unterschiedlichen Blickrichtungen α bzw. -α auf das Objekt 7b entsprechen. Diese Strahlungsdaten können nun unmittelbar als Bilddaten zur Erzeugung von Darstellungen für das linke bzw. rechte Auge des Benutzers verwendet werden. Beispielsweise können die Strahlungsdaten, welche gewonnen werden, wenn der Bereich 91 lichtdurchlässig ist und der Bereich 92 lichtundurchlässig ist, als Bilddaten für das rechte Auge verwendet werden, und es können die Strahlungsdaten, die gewonnen werden, wenn der Bereich 92 lichtdurchlässig ist und der Bereich 91 lichtundurchlässig ist, als Bilddaten für das linke Auge verwendet werden. Es entsteht dann beim Betrachter dieser Darstellungen ein voller stereoskopischer Eindruck des Objekts 7b.

Wenn der Benutzer seine Position azimutal um die optische Achse 83 des Objektivs verändert, ist es dann weiter möglich, die abwechselnd lichtdurchlässig und lichtundurchlässig geschalteten Bereiche 91 und 92 ebenfalls azimutal um die optische Achse zu verlagern, was durch entsprechende Ansteuerung der Flüssigkristallelemente der schaltbaren Blende 89 möglich ist. Diese Verlagerung der Bereiche 91 und 92 ist in Figur 8 durch Pfeile 141 angedeutet.

## Patentansprüche

1. Stereo-Mikroskopieverfahren zur Erzeugung wenigstens eines stereoskopischen Paars von Darstellungen eines Objekts (7) zur Betrachtung durch wenigstens einen Benutzer (9), umfassend:
- Detektieren (42, 43) von von einem Bereich (17) der Oberfläche des Objekts (7) ausgesandter optischer Strahlung und Bereitstellen von der registrierten Strahlung entsprechenden Strahlungsdaten (59, 60),
- Erfassen einer ersten Position (69) des Benutzers (9) relativ zu einem Fixpunkt (53) in einem Benutzerkoordinatensystem (55),
- Festlegen eines ersten und eines zweiten Ortes (P₁, P₂) relativ zu dem Bereich (17) des Objekts (7) im Objektkoordinatensystem (25),
- Erzeugen von stereoskopischen Bilddaten (73L, 73R) für eine erste und eine zweite Darstellung (75L, 75R) aus den Strahlungsdaten (59, 60), wobei die erste Darstellung den Bereich der Oberfläche des Objekts bei Betrachtung von dem ersten Ort aus darstellt und die zweite Darstellung den Bereich der Oberfläche des Objekts bei Betrachtung von dem zweiten Ort aus darstellt, wobei aus den Strahlungsdaten die Topografie und damit ein Datenmodell des Objekts rekonstruiert wird und die Bilddaten in Abhängigkeit von dem festgelegten ersten und zweiten Ort unter Verwendung des Datenmodells des Objekts erzeugt werden, und
- Zuführen der Bilddaten an eine Anzeige (75L, 75R) und Anzeigen der ersten Darstellung für ein linkes Auge (75L) des Benutzers und Anzeigen der zweiten Darstellung für ein rechtes Auge (75R) des Benutzers, und nachfolgend:
- Erfassen einer zweiten Position (69) des Benutzers (9) relativ zu dem Fixpunkt (53), wobei der erste Ort (P₁) gemeinsam mit dem zweiten Ort (P₂) relativ zu dem Bereich (17) der Oberfläche des Objekts (7) im Objektkoordinatensystem (25) verlagert wird, wenn sich die zweite Position im Vergleich zu der ersten Position verlagert hat,
**gekennzeichnet durch**
Festlegen von Azimuten φ, φ' und Elevationen (θ) des ersten und des zweiten Ortes (P₁, P₂) relativ zu dem Bereich (17) des Objekts (7) im Objektkoordinatensystem (25), wobei die Azimute φ, φ' des ersten und des zweiten Ortes (P₁, P₂) voneinander verschieden sind, also eine von Null verschiedene Azimut-Differenz φ-φ' aufweisen, wobei die Azimut-Differenz gewählt wird.

2. Stereo-Mikroskopieverfahren nach Anspruch 1, ferner umfassend: Verlagern des ersten Orts (P₁) gemeinsam mit dem zweiten Ort (P₂) azimutal um einen zweiten Winkel (φ₂), falls sich ein Azimut der zweiten Position im Vergleich zu einem Azimut der ersten Position um einen ersten Winkel (φ₁) verändert hat.

3. Stereo-Mikroskopieverfahren nach Anspruch 2, wobei ein Betrag des ersten Winkels (φ₁) im wesentlichen gleich einem Betrag des zweiten Winkels (φ₂) ist.

4. Stereo-Mikroskopieverfahren nach einem der Ansprüche 1 bis 3, ferner umfassend: Verlagern des ersten Orts (P₁) gemeinsam mit dem zweiten Ort (P₂) elevational um einen vierten Winkel (θ₂), falls sich eine Elevation der zweiten Position im Vergleich zu einer Elevation der ersten Position um einen dritten Winkel (θ₁) verändert hat.

5. Stereo-Mikroskopieverfahren nach Anspruch 4, wobei ein Betrag des dritten Winkels (θ₁) größer oder im wesentlichen gleich einem Betrag des vierten Winkels (θ₂) ist.

6. Stereo-Mikroskopieverfahren nach einem der Ansprüche 1 bis 5, wobei die Positionen jeweils mehrerer Benutzer erfaßt werden, einem jeden Benutzer jeweils der erste und der zweite Ort in Abhängigkeit von der erfaßten Position des jeweiligen Benutzers zugeordnet werden und für einen jeden Benutzer Bilddaten entsprechend einer Betrachtung des Objekts von dem ihm zugeordneten ersten bzw. zweiten Ort erzeugt werden.

7. Stereo-Mikroskopieverfahren nach einem der Ansprüche 1 bis 6, wobei das Erzeugen der Bilddaten (73L, 73R) aus den Strahlungsdaten (59, 60) umfaßt:
- Erzeugen eines eine Topographie einer Oberfläche des Bereichs (17) des Objekts (7) repräsentierenden wenigstens teilweise dreidimensionalen Datenmodells (63) in dem Objektkoordinatensystem (25) aus den Strahlungsdaten (59), und
- Erzeugen der Bilddaten (73L, 73R) für die erste und die zweite Darstellung aus dem Datenmodell (63) .

8. Stereo-Mikroskopieverfahren nach Anspruch 6 oder 7, wobei das Detektieren der von dem Bereich des Objekts ausgesandter Strahlung ein Detektieren einer Farbe von von Orten der Oberfläche ausgesandter Strahlung umfaßt und die bereitgestellten Strahlungsdaten der Farbe entsprechende Farbdaten umfassen, und wobei das Datenmodell derart erzeugt wird, daß dieses auch Farben der Oberfläche des Objekts repräsentiert.

9. Stereo-Mikroskopieverfahren nach einem der Ansprüche 6 bis 8, wobei das Erzeugen des Datenmodells eine Verwendung eines Musterprojektionsverfahrens oder/und eines Photogrammetrieverfahrens umfaßt.

10. Stereo-Mikroskopieverfahren nach einem der Ansprüche 1 bis 9, wobei der Fixpunkt (53) innerhalb des Bereichs (17) des Objekts (7) angeordnet ist.

11. Stereo-Mikroskopiesystem zur Erzeugung wenigstens eines stereoskopischen Paars von Darstellungen eines Objekts (7) zur Betrachtung durch wenigstens einen Benutzer (9), umfassend:
- eine Detektoranordnung (15) zum Detektieren von von einem Bereich (17) der Oberfläche des Objekts (7) ausgesandter optischer Strahlung und zum Bereitstellen von der registrierten Strahlung entsprechenden Strahlungsdaten,
- eine Positionserfassungseinrichtung (29) zum Erfassen einer ersten Position des Benutzers (9) relativ zu einem Fixpunkt (53) in einem Benutzerkoordinatensystem (55),
- eine Ortsbestimmungseinrichtung (23) zum Bestimmen eines ersten und eines zweiten Ortes (P₁, P₂) in einem Objektkoordinatensystem (25) in Abhängigkeit von einem Azimut oder/und einer Elevation, der Benutzerposition in dem Benutzerkoordinatensystem (55),
- eine Bilddatenerzeungseinrichtung (23) zum Erzeugen von stereoskopischen Bilddaten aus den Strahlungsdaten für eine erste und eine zweite Darstellung, wobei die erste Darstellung den Bereich der Oberfläche des Objekts bei Betrachtung von dem ersten Ort aus darstellt und die zweite Darstellung den Bereich der Oberfläche des Objekts bei Betrachtung von dem zweiten Ort aus darstellt, wobei die Bilddatenerzeugungseinrichtung einen Rechner (23) zum Berechnen eines für eine Topographie des Bereichs (17) des Objekts (7) repräsentativen Datenmodells aus den Strahlungsdaten in Abhängigkeit von dem festgelegten ersten und zweiten Ort umfasst, wobei der Rechner (23) einen Speicherbereich zum Speichern des Datenmodells aufweist, und zum Erzeugen der Bilddaten in Abhängigkeit von dem ersten und dem zweiten Ort aus dem Datenmodell ausgebildet ist, und
- eine Anzeigevorrichtung (75) zum Anzeigen der ersten Darstellung für ein linkes Auge des Benutzers und Anzeigen der zweiten Darstellung für ein rechtes Auge des Benutzers in Abhängigkeit von den Bilddaten,
**dadurch gekennzeichnet, dass** die Detektoranordnung umfaßt:
- einen Strahlungsprojektor (99, 101, 103), um ein Strahlungsmuster auf den Bereich des Objekts zu projizieren, und
- einen Detektor (109) zum Detektieren von von dem Bereich des Objekts zurückgeworfener Strahlung des Strahlungsprojektors.

12. Stereo-Mikroskopiesystem nach Anspruch 11, wobei die Bilddatenerzeugungseinrichtung umfaßt:
- eine Topographieerfassungsvorrichtung zum Erzeugen eines eine Topographie des Objekts in dem Objektkoordinatensystem repräsentierenden wenigstens teilweise dreidimensionalen Datenmodells und
- einen Darstellungsgenerator zum Erzeugen der ersten und der zweiten Darstellung aus dem Datenmodell.

13. Stereo-Mikroskopiesystem nach Anspruch 12, wobei die Detektoreinrichtung einen Farbdetektor (113) umfaßt zum Detektieren einer Farbe von von Orten der Oberfläche ausgesandter Strahlung und wobei die bereitgestellten Strahlungsdaten der Farbe entsprechende Farbdaten umfassen, und wobei die Topographieerfassungsvorrichtung dazu vorgesehen ist, das dreidimensionale Datenmodell derart zu erzeugen, daß dieses auch Farben der Oberfläche des Objekts repräsentiert.

14. Stereo-Mikroskopiesystem nach Anspruch 12 oder 13, wobei die Detektoranordnung ein Objektiv (81d) mit wenigstens einer Linse und einer Objektebene (95) zur Anordnung des Bereichs des Objekts aufweist, und wobei das projizierte Strahlmuster und die zurückgeworfene Strahlung die wenigstens eine Linse durchsetzen.

15. Stereo-Mikroskopiesystem nach einem der Ansprüche 12 bis 14, wobei die Detektoranordnung wenigstens eine Kamera (41, 42; 87) umfaßt, um wenigstens zwei Bilder des Bereichs des Objekts aus jeweils unterschiedlichen Blickwinkeln (α, -α) zu erzeugen.

16. Stereo-Mikroskopiesystem nach Anspruch 15, wobei zwei Kameras (41a, 42a) vorgesehen sind, von denen eine erste Kamera ein Bild des Bereichs (17a) des Objekts erzeugt und eine zweite Kamera ein Bild lediglich eines Teils (79) des Bereichs (17a) erzeugt, und wobei das von der Topographieerfassungsvorrichtung (15a) erzeugte Datenmodell die Topographie des Bereichs lediglich in dem Teilbereich dreidimensional repräsentiert und außerhalb des Teilbereichs zweidimensional repräsentiert.

17. Stereo-Mikroskopiesystem nach Anspruch 15, wobei eine Kamera, (87) vorgesehen ist, um die wenigstens zwei Bilder zeitlich nacheinander zu erzeugen, und wobei eine schaltbare Strahlführung (89) vorgesehen ist, um der einen Kamera (87) entsprechend wenigstens zwei Strahlenbündel zuzuführen, welche von dem Bereich des Objekts in unterschiedliche Richtungen ausgesandt sind.

18. Stereo-Mikroskopiesystem nach Anspruch 15, wobei eine Farbkamera (87c) vorgesehen ist, um die wenigstens zwei Bilder in verschiedenen Spektralbereichen aufzunehmen, und wobei eine Strahlführung mit wenigstens zwei Farbfiltern (91r, 91g, 91b) unterschiedlicher spektraler Durchlaßcharakteristik vorgesehen ist, um der Farbkamera (87c) jeweils einen der Farbfilter durchsetzende Strahlenbündel zuzuführen, welche von dem Bereich des Objekts in unterschiedliche Richtungen ausgesandt sind.

## Claims

1. A stereomicroscopy method for generating at least a stereoscopic pair of representations of an object (7) for observation by at least one user (9), comprising:
- detecting (42, 43) optical radiation emanating from a region (17) of the surface of the object (7) and providing radiation data (59, 60) corresponding to the detected radiation,
- detecting a first position (69) of the user (9) relative to a fixed point (53) in a user coordinate system (55),
- determining a first and a second location (P₁, P₂) relative to the region (17) of the object (7) in the object coordinate system (25),
- generating from the radiation data (59, 60) stereoscopic image data (73L, 73R) for a first representation and a second representation (75L, 75R), the first representation representing the region of the surface of the object viewed from the first location and the second representation representing the region of the object viewed from the second location, wherein the topography and thus a data model of the object is reconstructed from the radiation data and the image data are generated as a function of the determined first and second locations by use of the data model of the object, and
- supplying the image data to a display (75L, 75R) and displaying the first representation for a left eye (75L) of the user and displaying the second representation for a right eye (75R) of the user, and subsequently:
- detecting a second position (69) of the user (9) relative to the fixed point (53), the first location (P₁) being displaced together with the second location (P₂) relative to the region (17) of the surface of the object (7) in the object coordinate system (25) if the second position has changed as compared to the first position,
**characterized by**
determining azimuths φ, φ' and elevations (θ) of the first location and the second location (P₁, P₂) relative to the region (17) of the object (7) in the object coordinate system (25), the azimuths φ ,φ' of the first and second locations (P₁, P₂) being different from each other, that is, they have an azimuth difference φ-φ' which is different from Zero, the azimuth difference being selected.

2. The stereomicroscopy method according to claim 1, further comprising: displacing the first location (P₁) together with the second location (P₂) azimuthally by a second angle (φ₂) if an azimuth of the second position has changed as compared to an azimuth of the first position by a first angle (φ₁).

3. The stereomicroscopy method according to claim 2, wherein a magnitude of the first angle (φ₁) is substantially equal to a magnitude of the second angle (φ₂).

4. The stereomicroscopy method according to one of claims 1 to 3, further comprising: displacing the first location (P₁) together with the second location (P₂) elevationally by a fourth angle (θ₂) if an elevation of the second position has changed as compared to an elevation of the first position by a third angle (θ₁).

5. The stereomicroscopy method according to claim 4, wherein a magnitude of the third angle (θ₁) is higher or substantially equal to a magnitude of the fourth angle (θ₂).

6. The stereomicroscopy method according to one of claims 1 to 5, wherein the positions of a plurality of users are detected, the first and second locations being allocated to each one of the users as a function of the detected position of the respective user and image data being produced for each user corresponding to an observation of the object from the first location and second location, respectively, allocated to the respective user.

7. The stereomicroscopy method according to one of claims 1 to 6, wherein the generation of the image data (73L, 73R) from the radiation data (59, 60) comprises:
- generating from the radiation data (59) an at least partially three-dimensional data model (63) in the object coordinate system (25), said data model being representative of a topography of a surface of the region (17) of the object (7), and
- generating from the data model (63) the image data (73L, 73R) for the first representation and the second representation.

8. The stereomicroscopy method according to claim 6 or 7, wherein the detection of the radiation emanating from the region of the object comprises a detection of a color of radiation emanating from locations of the surface and the color radiation data provided comprise color data corresponding to the color, and wherein the data model is generated such that it is also representative of colors of the surface of the object.

9. The stereomicroscopy method according to one of claims 6 to 8, wherein the generation of the data model comprises an application of a pattern projection method or/and of a photogrammetry method.

10. The stereomicroscopy method according to one of claims 1 to 9, wherein the fixed point (53) is disposed within the region (17) of the object (7).

11. A stereomicroscopy system for generating at least a stereoscopic pair of representations of an object (7) for observation by at least one user (9), comprising:
- a detection arrangement (15) for detecting optical radiation emanating from a region (17) of the surface of the object (7) and for providing radiation data corresponding to the detected radiation,
- a position detection apparatus (29) for detecting a first position of the user (9) relative to a fixed point (53) in a user coordinate system (55),
- a location determination device (23) for determining a first and a second location (P₁, P₂) in an object coordinate system (25) as a function of an azimuth or/and an elevation of the user position in the user coordinate system (55),
- an image data generation device (23) for generating stereoscopic image data from the radiation data for a first representation and a second representation, the first representation representing the region of the surface of the object viewed from the first location and the second representation representing the region of the surface of the object viewed from the second location, said image data generation device comprising a computer (23) for computing from the radiation data a data model representative of a topography of the region (17) of the object (7) as a function of the determined first and second locations, said computer (23) comprising a memory area for storing said data model, and for generating the image data as a function of the first and the second locations of the data model, and
- a display apparatus (75) for displaying the first representation for a left eye of the user and for displaying the second representation for a right eye of the user as a function of the image data,
**characterized in that** the detection arrangement comprises:
- a radiation projector (99, 101, 103) for projecting a radiation pattern on the region of the object, and
- a detector (109) for detecting radiation of the radiation projector reflected from the region of the object.

12. The stereomicroscopy system according to claim 12, wherein the image data generation device comprises:
- a topography detection apparatus for generating an at least partially three-dimensional data model representing a topography of the object in the object coordinate system and
- a representation generator for generating from the data model the first representation and the second representation.

13. The stereomicroscopy system according to claim 12, wherein the detection device comprises a color detector (113) for detecting a color of radiation emanating from locations of the surface, and wherein the color radiation data provided comprise color data corresponding to the color, and wherein the topography detection apparatus is provided for generating the three-dimensional data model such that it also represents colors of the surface of the object.

14. The stereomicroscopy system according to claims 12 or 13, wherein the detection arrangement comprises an objective (81d) with at least one lens and an object plane (95) for positioning the region of the object, and wherein the projected beam pattern and the reflected radiation pass through the at least one lens.

15. The stereomicroscopy system according to one of claims 12 to 14, wherein the detection arrangement comprises at least one camera (41, 42; 87) for producing at least two images of the region of the object at respectively different angles of view (α, -α).

16. The stereomicroscopy system according to claim 15, wherein two cameras (41a, 42a) are provided of which a first camera produces an image of the region (17a) of the object and a second camera produces an image of merely a part (79) of the region (17a), and wherein the data model generated by the topography detection apparatus (15a) represents the topography of the region three-dimensionally merely in the partial region and outside of the partial region two-dimensionally.

17. The stereomicroscopy system according to claim 15, wherein a camera (87) is provided for producing the at least two images successively in time, and wherein a switchable radiation guidance (89) is provided for accordingly supplying at least two beam bundles to the one camera (87) which emanate from the region of the object into different directions.

18. The stereomicroscopy system according to claim 15, wherein a color camera (87c) is provided to record the at least two images in different spectral ranges, and wherein a radiation guidance is provided with at least two color filters (91r, 91g, 91b) having different spectral transmittance characteristics for respectively supplying to the color camera (87c) a beam bundle passing through the color filter, said beam bundles emanating from the region of the object into different directions.

## Revendications

1. Procédé de microscopie stéréoscopique destiné à générer au moins une paire de représentations stéréoscopiques d'un objet (7) à observer par au moins un utilisateur (9), comportant :
- une détection (42, 43) d'un rayonnement optique émis depuis une zone (17) de la surface de l'objet (7) et une mise à disposition des données de rayonnement (59, 60) correspondantes au rayonnement enregistré,
- un enregistrement d'une première position (69) de l'utilisateur (9) par rapport à un point fixe (53) dans un système de coordonnées de l'utilisateur (55),
- une définition d'un premier et d'un deuxième lieu (P₁, P₂) par rapport à la zone (17) de l'objet (7) dans le système de coordonnées de l'objet (25),
- une production de données d'image (73L, 73R) stéréoscopiques pour une première et une deuxième représentation (75L, 75R) à partir des données de rayonnement (59, 60), la première représentation représentant la zone de la surface de l'objet dans le cas d'une observation à partir du premier lieu et la deuxième représentation représentant la zone de la surface de l'objet dans le cas d'une observation à partir du deuxième lieu, la topographie et donc un modèle de données de l'objet étant reconstruits à partir des données de rayonnement, et les données d'image étant générées en fonction du premier et du deuxième lieu défini, moyennant l'utilisation du modèle de données de l'objet, et
- un acheminement de données d'image vers un dispositif d'affichage (75L, 75R) et l'affichage de la première représentation pour un oeil gauche (75L) de l'utilisateur et l'affichage de la deuxième représentation pour un oeil droit (75L) de l'utilisateur, et ensuite :
- un enregistrement d'une deuxième position (69) de l'utilisateur (9) par rapport au point fixe (53), le premier lieu (P₁) étant déplacé conjointement avec le deuxième lieu (P₂) par rapport à la zone (17) de la surface de l'objet (7) dans le système de coordonnées de l'objet (25), lorsque la deuxième position s'est déplacée par rapport à la première position,
**caractérisé par**
la définition d'azimuts φ, φ' et d'élévations (θ) du premier et du deuxième lieu (P₁, P₂) par rapport à la zone (17) de l'objet (7) dans le système de coordonnées de l'objet (25), les azimuts φ, φ' du premier et du deuxième lieu (P₁, P₂) étant différents l'un de l'autre, présentent donc une différence d'azimut φ-φ' différente de zéro, la différence d'azimut étant sélectionnée.

2. Procédé de microscopie stéréoscopique selon la revendication 1, comportant en outre : un déplacement du premier lieu (P₁) conjointement avec le deuxième lieu (P₂) en azimut selon un deuxième angle (φ₂), au cas où un azimut de la deuxième position a varié par rapport à un azimut de la première position selon un premier angle (φ₁).

3. Procédé de microscopie stéréoscopique selon la revendication 2, dans lequel une valeur du premier angle (φ₁) est sensiblement égale à une valeur du deuxième angle (φ₂).

4. Procédé de microscopie stéréoscopique selon l'une quelconque des revendications 1 à 3, comportant en outre : un déplacement du premier lieu (P₁) conjointement avec le deuxième lieu (P₂) en élévation selon un quatrième angle (φ₂), au cas où une élévation de la deuxième position a varié par rapport à une élévation de la première position selon un troisième angle (φ₁).

5. Procédé de microscopie stéréoscopique selon la revendication 4, dans lequel une valeur du troisième angle (φ₁) est supérieure ou sensiblement égale à une valeur du quatrième angle (φ₂).

6. Procédé de microscopie stéréoscopique selon l'une quelconque des revendications 1 à 5, dans lequel les positions de plusieurs utilisateurs sont enregistrées, le premier et le deuxième lieu sont associés respectivement à chaque utilisateur en fonction de la position enregistrée de l'utilisateur respectif, et des données d'image sont générées pour chacun des utilisateurs conformément à une observation de l'objet depuis le premier ou le deuxième lieu qui lui est associé.

7. Procédé de microscopie stéréoscopique selon l'une quelconque des revendications 1 à 6, dans lequel la production de données d'image (73L, 73R) à partir des données de rayonnement (59, 60) comporte :
- une production d'un modèle de données (63) au moins partiellement tridimensionnel, représentant une topographie d'une surface de la zone (17) de l'objet (7), dans le système de coordonnées de l'objet (25) à partir des données de rayonnement (59), et
- une production de données d'image (73L, 73R) pour la première et la deuxième représentation à partir du modèle de données (63).

8. Procédé de microscopie stéréoscopique selon la revendication 6 ou 7, dans lequel la détection du rayonnement émis depuis la zone de l'objet comporte une détection d'une couleur d'un rayonnement émis à partir de lieux de la surface, et les données de rayonnement de couleur mises à disposition comportent des données de couleur correspondantes, et dans lequel le modèle de données est généré de telle sorte que celui-ci représente aussi des couleurs de la surface de l'objet.

9. Procédé de microscopie stéréoscopique selon l'une quelconque des revendications 6 à 8, dans lequel la production du modèle de données comporte une utilisation d'un procédé de projection d'un motif ou/et un procédé de photogrammétrie.

10. Procédé de microscopie stéréoscopique selon l'une quelconque des revendications 1 à 9, dans lequel le point fixe (53) est disposé à l'intérieur de la zone (17) de l'objet (7).

11. Système de microscopie stéréoscopique destiné à générer au moins une paire de représentations stéréoscopiques d'un objet (7) à observer par au moins un utilisateur (9), comportant :
- un système de détection (15) destiné à détecter un rayonnement optique émis depuis une zone (17) de la surface de l'objet (7) et destiné à mettre à disposition des données de rayonnement (59, 60) correspondantes au rayonnement enregistré,
- un dispositif d'enregistrement de position (29), destiné à enregistrer une première position de l'utilisateur (9) par rapport à un point fixe (53) dans un système de coordonnées de l'utilisateur (55),
- un dispositif de détermination de lieu (23) destiné à déterminer un premier et un deuxième lieu (P₁, P₂) dans un système de coordonnées de l'objet (25) en fonction d'un azimut ou/et d'une élévation de la position de l'utilisateur dans le système de coordonnées de l'utilisateur (55),
- un générateur de données d'image (23) destiné à générer des données d'image stéréoscopiques à partir de données de rayonnement pour une première et une deuxième représentation, la première représentation représentant la zone de la surface de l'objet dans le cas d'une observation à partir du premier lieu et la deuxième représentation représentant la zone de la surface de l'objet dans le cas d'une observation à partir du deuxième lieu, le générateur de données d'image comportant un calculateur (23) destiné à calculer un modèle de données représentatif pour une topographie de la zone (17) de l'objet (7), à partir des données de rayonnement en fonction du premier et du deuxième lieu défini, le calculateur (23) comportant une zone de mémoire destinée à mémoriser le modèle de données, et étant réalisé pour générer, à partir du modèle de données, des données d'image en fonction du premier et du deuxième lieu, et
- un dispositif d'affichage (75) destiné à afficher la première représentation pour un oeil gauche de l'utilisateur et destiné à afficher la deuxième représentation pour un oeil droit de l'utilisateur en fonction des données d'image,
**caractérisé en ce que** le dispositif de détection comporte :
- un projecteur de rayonnement (99, 101, 103) pour projeter un motif de rayonnement sur la zone de l'objet, et
- un détecteur (109) destiné à détecter le rayonnement du projecteur de rayonnement, renvoyé par la zone de l'objet.

12. Système de microscopie stéréoscopique selon la revendication 11, dans lequel le générateur de données d'image comporte :
- un dispositif d'enregistrement de la topographie, destiné à générer un modèle de données au moins partiellement tridimensionnel, représentant une topographie de l'objet dans un système de coordonnées de l'objet, et
- un générateur de représentation destiné à générer la première et la deuxième représentation à partir du modèle de données.

13. Système de microscopie stéréoscopique selon la revendication 12, dans lequel le dispositif de détection comporte un détecteur de couleur (113), destiné à détecter une couleur d'un rayonnement émis à partir de lieux de la surface, et dans lequel les données de rayonnement de couleur mises à disposition comportent des données de couleur correspondantes, et dans lequel le dispositif d'enregistrement de la topographie est prévu pour générer le modèle de données tridimensionnel de telle sorte que celui-ci représente aussi des couleurs de la surface de l'objet.

14. Système de microscopie stéréoscopique selon la revendication 12 ou 13, dans lequel le système de détection comporte un objectif (81d) avec au moins une lentille et un plan d'objet (95) pour l'agencement de la zone de l'objet, et dans lequel le motif de rayonnement projeté et le rayonnement renvoyé traversent ladite au moins une lentille.

15. Système de microscopie stéréoscopique selon l'une quelconque des revendications 12 à 14, dans lequel le système de détection comporte au moins une caméra (41, 42 ; 87), pour générer au moins deux images de la zone de l'objet à partir d'angles de vue (α, -α) respectivement différents.

16. Système de microscopie stéréoscopique selon la revendication 15, dans lequel il est prévu deux caméras (41a, 42a), parmi lesquelles une première caméra génère une image de la zone (17a) de l'objet et une deuxième caméra génère une image seulement d'une partie (79) de la zone (17a), et dans lequel le modèle de données, généré par le dispositif d'enregistrement de la topographie (15a), représente la topographie de la zone sous forme tridimensionnelle seulement dans la zone partielle et sous forme bidimensionnelle en dehors de la zone partielle.

17. Système de microscopie stéréoscopique selon la revendication 15, dans lequel il est prévu une caméra (87) pour générer lesdites au moins deux images l'une après l'autre dans le temps, et dans lequel il est prévu un guidage de rayons (89) commutable pour acheminer de manière correspondante deux faisceaux de rayons vers la caméra (87), lesquels sont émis dans des directions différentes depuis la zone de l'objet.

18. Système de microscopie stéréoscopique selon la revendication 15, dans lequel il est prévu une caméra couleur (87c) pour enregistrer lesdites au moins deux images dans différents domaines du spectre, et dans lequel il est prévu un guidage de rayons avec au moins deux filtres de couleur (91r, 91g, 91b) avec une caractéristique de passage spectrale différente, afin d'acheminer vers la caméra couleur (87c) des faisceaux de rayons traversant respectivement un des filtres de couleur, lesquels sont émis dans des directions différentes depuis la zone de l'objet.
